# EUROPÄISCHE PATENTSCHRIFT

(11) **EP 2 014 010 B1**
(45) Veröffentlichungstag und Bekanntmachung des Hinweises auf die Patenterteilung: **15.12.2010**
(21) Anmeldenummer: 07727160.9
(22) Anmeldetag: 21.03.2007
(51) Int. Cl.: H04L 9/08, H04L 12/18

(54) **VERFAHREN, VORRICHTUNGEN UND COMPUTERPROGRAMMPRODUKT ZUM VER- UND ENTSCHLÜSSELN VON MEDIENDATEN**
METHOD, DEVICES AND COMPUTER PROGRAM PRODUCT FOR ENCODING AND DECODING MEDIA DATA
PROCÉDÉ, DISPOSITIFS ET PROGRAMME INFORMATIQUE POUR CODER ET DÉCODER DES DONNÉES MULTIMÉDIAS

(30) Priorität: 21.04.2006 DE 102006018645
(43) Veröffentlichungstag der Anmeldung: 14.01.2009
(73) Patentinhaber: Nokia Siemens Networks GmbH & Co. KG, 81541 München (DE)
(72) Erfinder: THIRUVENGADAM, Srinath, 86609 Donauwörth (DE)
(86) Internationale Anmeldenummer: PCT/EP2007/052683
(87) Internationale Veröffentlichungsnummer: WO 2007/122046

(56) Entgegenhaltungen:
- US-A1- 2003 039 361
- US-A1- 2003 088 769
- US-A1- 2005 232 429
- "Digital cellular telecommunications system (Phase 2+)" Dezember 2005 (2005-12), ETSI STANDARDS, EUROPEAN TELECOMMUNICATIONS STANDARDS INSTITUTE, SOPHIA-ANTIPO, FR , XP014032881 ISSN: 0000-0001 das ganze Dokument

## Beschreibung

Die Erfindung betrifft Verfahren zum Ver- und Entschlüsseln von Mediendaten in einem Kommunikationssystem. Die Erfindung betrifft außerdem ein Teilnehmergerät und einen Kontrollserver als Teile eines Kommunikationssystems sowie ein Computerprogrammprodukt, mit denen das Verfahren durchführbar ist.

Mit der zunehmenden Verbreitung von Breitbandmobilfunknetzen, z.B. UMTS (Universal Mobile Telecommunications System) hat das so genannte Third Generation Partnership Project (3GPP) eine Reihe von Standards zur Integration von Sprach- und Internetdiensten unter dem Namen IP-Multimediasubsystem (IMS) entwickelt. Die IMS-Standards sollen die Verschmelzung von paket- und leitungsvermittelnden Netzwerken, insbesondere im mobilen Bereich, vorantreiben. IMS-Systeme eignen sich jedoch auch zur Übertragung von Mediendaten in Festnetzen, beispielsweise über öffentliche Telefonnetzwerke oder das Internet.

Bei Mobilfunknetzwerken gemäß dem 3GPP UMTS Terrestrial Radio Access Network (UTRAN) Standard werden Daten auf einer der unteren Übertragungsebenen des Netzwerkprotokolls, z.B. in der Sicherungsschicht, verschlüsselt. Daher sehen die IMS Access Security (3GPP TS 33.203) und Network Domain Security (3GPP TS 33.210) Standards keine separate Verschlüsselung von Mediendaten vor. In Festnetzen findet eine solche Verschlüsselung von übertragenen Daten jedoch nicht statt.

Oftmals ist eine Verschlüsselung von Mediendaten jedoch erwünscht. Denn zum einen sind insbesondere Netzwerke, die auf dem Internetprotokoll (IP) basieren, notorisch unsicher, sodass beispielsweise Videotelefongespräche, die zumindest teilweise über solche Netzwerke geführt werden, verhältnismäßig leicht abgehört werden können. Zum anderen werden Mediendaten oftmals als so genannte kostenpflichtige Mehrwertdienste, wie beispielsweise Video-on-Demand, angeboten. Auch hierbei muss sichergestellt werden, dass die übertragenen Mediendaten nur vom rechtmäßigen Empfänger genutzt werden.

Ein Standard zur sicheren Übertragung von Mediendaten zwischen zwei Teilnehmern ist beispielsweise aus dem Secure Realtime Transport Protocol (SRTP, entsprechend RFC 3711) bekannt. Eine Datenübertragung nach dem SRTP-Standard lässt sich aber insbesondere in heterogenen Netzwerken nicht einsetzen, da es teilweise an Netzwerkgrenzen, etwa beim Übergang vom Internet zu öffentlichen Telefonnetzen, zu technischen Problemen bei der Umsetzung von verschlüsselten Datenströmen kommt.

Es ist daher Aufgabe der Erfindung, Verfahren und Vorrichtungen eines Kommunikationssystems zu beschreiben, bei denen eine Verschlüsselung von Mediendaten zur Übertragung in einem Mediennetzwerk auf einfache und sichere Weise möglich ist.

Die Aufgabe wird gelöst durch die Merkmale der unabhängigen Patentansprüche. Vorteilhafte Ausgestaltungen der Erfindung sind in den jeweiligen abhängigen Ansprüchen gekennzeichnet.

Gemäß eines ersten Aspekts zeichnet sich die Erfindung durch ein Verfahren zum Ver- und Entschlüsseln von Mediendaten aus, das die folgenden Schritte aufweist: Eine Anfrage wird von einem Teilnehmergerät über ein Kontrollnetzwerk an einen Kontrollserver zum Festlegen eines Satzes von Verschlüsselungsparametern für Kontrolldaten übertragen. Dabei umfasst die Anfrage Identifizierungsdaten des Teilnehmergerätes. Der Kontrollserver legt daraufhin den Satz von Verschlüsselungsparametern für die Kontrolldaten fest, umfassend eine Zufallszahl, einen Kontrolldatenschlüssel und einen Integritätsschlüssel, wobei der Kontrolldatenschlüssel und der Integritätsschlüssel abhängig von der Zufallszahl und den Identifizierungsdaten sind. Danach wird ein Medienschlüssel in Abhängigkeit des Kontrolldatenschlüssels und des Integritätsschlüssels durch den Kontrollserver erzeugt und über ein Kernnetzwerk an einen Medienserver übertragen. Anschließend werden unverschlüsselte Mediendaten durch den Medienserver unter Verwendung des Medienschlüssels zur Versendung über ein Datennetzwerk an das Teilnehmergerät verschlüsselt und/oder über das Datennetzwerk empfangene, von einem Teilnehmergerät gesendete verschlüsselte Mediendaten unter Verwendung des Medienschlüssels durch den Medienserver entschlüsselt.

Zur Verschlüsselung der Kontrolldaten ist es bei einem Kommunikationssystem unerlässlich, den Kontrolldatenschlüssel und gegebenenfalls zusätzlich den Integritätsschlüssel zwischen dem Teilnehmergerät und dem Kontrollserver auszuhandeln. Dadurch, dass der Medienschlüssel aus diesen bereits bekannten Schlüsseln bestimmt wird, kann auf ein zusätzliches Aushandeln des Medienschlüssels verzichtet werden. Vorteilhaft werden so Netzwerkverkehr und Rechenleistung vermindert, die beispielsweise für eine Authentifizierung des Teilnehmergerätes gegenüber dem Kontrollserver beim separaten Aushandeln des Medienschlüssels erforderlich würden.

Gemäß einer vorteilhaften Ausgestaltung des ersten Aspekts werden zusätzlich zum Medienschlüssel weitere Verschlüsselungsparameter, insbesondere den einzusetzende Verschlüsselungsalgorithmus betreffend, von dem Kontrollserver über das Kernnetzwerk an den Medienserver übertragen. Auf diese Weise kann das Verfahren universell in verschiedenen Verschlüsselungskontexten eingesetzt werden.

Vorteilhafterweise werden dabei die weiteren Verschlüsselungsparameter entweder zuvor vom Teilnehmergerät festgelegt und an den Kontrollserver übertragen oder zwischen dem Teilnehmergerät und dem Kontrollserver ausgehandelt. Dadurch wird erreicht, dass für beide Seiten, Teilnehmergerät und Kontrollserver bzw. Medienserver, geeignete Verschlüsselungsparameter, also z.B. ein geeigneter, beiden Seiten bekannter Verschlüsselungsalgorithmus, eingesetzt wird.

Die Aufgabe wird gemäß einem zweiten Aspekt ebenfalls durch ein Verfahren gelöst, bei dem analog zum ersten Aspekt eine Anfrage von einem Teilnehmergerät über ein Kontrollnetzwerk an einen Kontrollserver zum Festlegen eines Satzes von Verschlüsselungsparametern für Kontrolldaten übertragen wird. Von dem daraufhin erzeugten Satz von Verschlüsselungsparametern wird eine Zufallszahl zurück an das Teilnehmergerät geschickt. Das Teilnehmergerät erzeugt anhand von Identifizierungsdaten und der Zufallszahl einen Kontrolldatenschlüssel und einen Integritätsschlüssel. Danach wird ein Medienschlüssel in Abhängigkeit des Kontrolldatenschlüssels und des Integritätsschlüssels durch das Teilnehmergerät erzeugt. Anschließend werden über das Datennetzwerk empfangene, von einem Medienserver gesendete verschlüsselte Mediendaten unter Verwendung des Medienschlüssels durch das Teilnehmergerät entschlüsselt und/oder unverschlüsselte Mediendaten durch das Teilnehmergerät unter Verwendung des Medienschlüssels zur Versendung über ein Datennetzwerk an den Medienserver verschlüsselt. Die sich ergebenen Vorteile entsprechen denen des ersten Aspekts.

Gemäß weiterer vorteilhafter Ausgestaltungen der Erfindung wird der Medienschlüssel entweder durch eine exklusive Oder-Verknüpfung (XOR) oder mit Hilfe einer Einweg-Hash-Funktion aus dem Kontrolldatenschlüssel und dem Integritätsschlüssel gebildet. Beides sind einfach zu implementierende Funktionen und bieten den vorteilhaften Sicherheitsaspekt, dass aus dem Medienschlüssel nicht auf den Kontrolldatenschlüssel und den Integritätsschlüssel zurückgeschlossen werden kann. Beim Einsatz der Einweg-Hash-Funktion kann auch bei Kenntnis des Medienschlüssels und eines der beiden anderen Schlüssel der dritte Schlüssel nicht ermittelt werden.

Gemäß weiterer vorteilhafter Ausgestaltungen der Erfindung wird der Medienschlüssel entweder direkt zur Ver- und Entschlüsselung verwendet oder es wird abhängig vom Medienschlüssel ein weiterer Schlüssel bestimmt, der zur Ver- und Entschlüsselung verwendet wird.

Gemäß einem dritten Aspekt wird die Aufgabe ebenfalls durch einen Kontrollserver eines Kommunikationssystems mit einer ersten Schnittstelle zu einem Kontrollnetzwerk und einer zweiten Schnittstelle zu einem Kernnetzwerk gelöst. Der Kontrollserver ist dabei über die erste Schnittstelle und das Kontrollnetzwerk mit einem Teilnehmergerät und über die zweite Schnittstelle und das Kernnetzwerk mit einem Medienserver verbindbar. Der Kontrollserver ist dazu eingerichtet, Identifizierungsdaten von dem Teilnehmergerät zu empfangen und einen Satz von Verschlüsselungsparametern für Kontrolldaten festzulegen. Die Verschlüsselungsparameter umfassen dabei eine Zufallszahl und, abhängig von der Zufallszahl und den Identifizierungsdaten, einen Kontrolldatenschlüssel und einen Integritätsschlüssel. Der Kontrollserver ist weiterhin dazu eingerichtet, einen Medienschlüssel in Abhängigkeit des Kontrolldatenschlüssels und des Integritätsschlüssels zu erzeugen und über das Kernnetzwerk an den Medienserver zu übertragen.

Analog dazu wird die Aufgabe gemäß einem vierten Aspekt durch ein Teilnehmergerät zur Verwendung in einem Kommunikationssystem mit einer ersten Schnittstelle zu einem Kontrollnetzwerk und einer zweiten Schnittstelle zu einem Mediennetzwerk gelöst. Das Teilnehmergerät ist dabei über die erste Schnittstelle und das Kontrollnetzwerk zum Austausch von Kontrolldaten mit einem Kontrollserver und über die zweite Schnittstelle und das Mediennetzwerk zum Austausch von Mediendaten mit einem Medienserver verbindbar. Das Teilnehmergerät ist dazu eingerichtet, Identifizierungsdaten an den Kontrollserver zu senden, als Antwort eine Zufallszahl zu empfangen und einen Kontrolldatenschlüssel und einen Integritätsschlüssel abhängig von der Zufallszahl und den Identifizierungsdaten zu erzeugen, wobei der Kontrolldatenschlüssel und der Integritätsschlüssel der Ver- und Entschlüsselung der Kontrolldaten dienen. Das Teilnehmergerät ist weiterhin dazu eingerichtet, einen Medienschlüssel in Abhängigkeit des Kontrolldatenschlüssels und des Integritätsschlüssels zu erzeugen, wobei der Medienschlüssel der Ver- und Entschlüsselung der Mediendaten dient.

Gemäß einem fünften Aspekt wird die Aufgabe durch ein Computerprogrammprodukt mit Programmcode zur Ausführung eines Computerprogramms auf einem oder mehreren Computern eines Kommunikationssystems gelöst, wobei bei der Ausführung des Programmcodes eines der angegebenen Verfahren ausgeführt wird.

Ebenso wie das Computerprogrammprodukt ermöglichen der Kontrollserver und das Teilnehmergerät die Durchführung der erfindungsgemäßen Verfahren. Die sich ergebenden Vorteile des dritten, vierten und fünften Aspekts entsprechen daher denen des ersten und zweiten Aspekts.

Die Erfindung wird nachfolgend anhand von Ausführungsbeispielen mit Hilfe von drei Figuren näher erläutert. Die Figuren zeigen:
- Figur 1: ein Kommunikationssystem mit einem Teilnehmergerät, einem Kontrollserver und einem Medienserver,
- Figur 2: eine Ausgestaltung eines Kontrollservers und
- Figur 3: ein Sequenzdiagramm eines Verbindungsaufbaus und einer nachfolgende Übertragung von verschlüsselten Mediendaten von einem Medienserver zu einem Teil- nehmergerät.

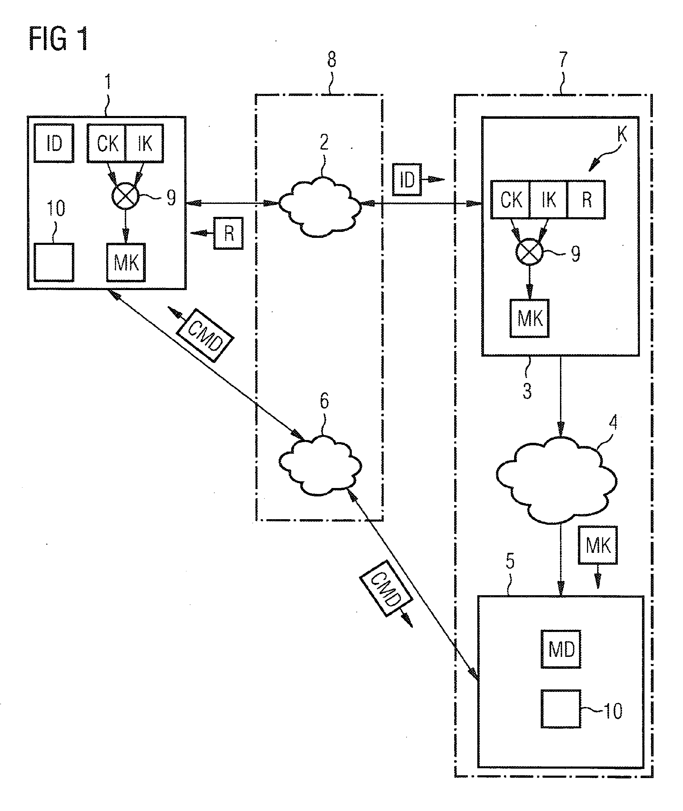

Figur 1 zeigt ein Kommunikationssystem, aufweisend ein Teilnehmergerät 1 mit Identifizierungsdaten ID, das über ein Kontrollnetzwerk 2 mit einem Kontrollserver 3 verbunden ist. Über das Kontrollnetzwerk 2 können beispielsweise die Identifizierungsdaten ID und eine Zufallszahl R übertragen werden. Der Kontrollserver 3 weist Verschlüsselungsparameter K auf, die einen Kontrolldatenschlüssel CK, einen Integritätsschlüssel IK und die Zufallszahl R umfassen. Der Kontrollserver 3 ist über ein Kernnetzwerk 4, über das ein Medienschlüssel MD übertragen wird, mit einem Medienserver 5, der unverschlüsselte Mediendaten MD aufweist, verbunden. Der Medienserver 5 ist über ein Datennetzwerk 6, über das verschlüsselte Mediendaten CMD übertragen werden, wiederum mit dem Teilnehmergerät 1 verbunden. Kontrollserver 3, Kernnetzwerk 4 und Medienserver 5 bilden eine oder sind Teil einer Vermittlungsstelle 7. Kontrollnetzwerk 2 und Datennetzwerk 6 bilden zusammen ein Zugangsnetzwerk 8. Das Teilnehmergerät 1 und der Kontrollserver 3 weisen eine Medienschlüsselgenerator 9 auf.

Die in Figur 1 gezeigte Anordnung stellt einen Auszug aus einem Kommunikationssystem dar. Der Einfachheit halber ist nur ein Teilnehmergerät 1 dargestellt, üblicherweise ist eine Vielzahl an Teilnehmergeräten vorhanden, die jeweils über ein Zugangsnetzwerk mit der Vermittlungsstelle 7 verbunden sind. Auch können in einem Kommunikationsnetzwerk mehrere Vermittlungsstellen vorgesehen sein, wobei eine erste Gruppe von Teilnehmergeräten an einer erste Vermittlungsstelle und eine zweite Gruppe von Teilnehmergeräten an einer zweiten Vermittlungsstelle angeschlossen ist. Die einzelnen Vermittlungsstellen sind in einem solchen Fall typischerweise sowohl über ihre Kontrollserver, als auch über ihre Medienserver verbunden. Es ist allerdings auch denkbar, dass mehrere Vermittlungsstellen mit jeweils eigenen Kontrollservern sich eines gemeinsamen Medienservers bedienen. Die Verbindung zwischen verschiedenen Vermittlungsstellen kann über ein dem Kernnetzwerk 4 entsprechendes Netzwerk erfolgen. Alternativ kann das Kernnetzwerk 4 übergreifend in und zwischen mehrere Verbindungsstellen ausgedehnt sein.

Ein Kommunikationssystem der beschriebenen Art ist geeignet, Daten und/oder (als Daten kodierte) Telefongespräche zwischen zwei Teilnehmergeräten, also z.B. dem gezeigten Teilnehmergerät 1 und einem weiteren, nicht gezeigten Teilnehmergerät, über den Medienserver 5 und ggf. weitere Medienserver zu übertragen. Ebenso ist möglich, dass das Teilnehmergerät 1 ohne Beteiligung eines weiteren Teilnehmergerätes Daten von dem Medienserver 5 erhält oder auch mit diesem austauscht. Ein solcher Fall tritt beispielsweise auf, wenn Dienste wie Video-on-demand benutzt werden.

Bei dem Zugangsnetzwerk 8 handelt es sich beispielsweise um ein leitungsgebundenes, öffentliches Telefonnetzwerk wie z.B. ein analoges Telefonnetzwerk oder ein ISDN-Telefonnetzwerk (Integrated Services Digital Network). Bei weiteren Zugangsnetzwerken kann es sich beispielsweise um drahtlose Mobilfunknetzwerke, wie z.B. GSM (Global System for Mobile Communication) - oder UMTS-Netzwerke handeln. Bei dem Kernnetzwerk 4 handelt es sich beispielsweise um ein Datennetzwerk nach dem Internetprotokoll, das ein Anbieter von Kommunikationsdienstleistungen in oder zwischen Vermittlungsstellen zur Datenübertragung nutzt.

Im Zugangsnetzwerk 8 werden Kontrolldaten über das Kontrollnetzwerk 2 und Nutzdaten über das Mediennetzwerk 6 übertragen. Dabei kann es sich bei dem Kontrollnetzwerk 2 und dem Mediennetzwerk 6 um physikalisch getrennte Netzwerke handeln, oder auch um logisch getrennte Netzwerke ein und desselben physikalischen Netzwerkes handeln. Nur logisch getrennte Netzwerke liegen beispielsweise vor, wenn Kontroll- und Nutzdaten über unterschiedliche Protokollebenen auf einem einzelnen Übertragungskanal zwischen der Vermittlungsstelle 7 und dem Teilnehmergerät 1 ausgetauscht werden. Es kann sich aber auch um getrennte Übertragungskanäle, wie beispielsweise einem so genannten ISDN-Steuerkanal D und einem so genannten ISDN-Datenkanal B, handeln.

Insbesondere wenn es sich bei dem Zugangsnetzwerk 8 um ein leitungsgebundenes Telefonnetzwerk handelt, sollten Nutzdaten nicht unverschlüsselt zwischen Teilnehmergerät 1 und Medienserver 5 ausgetauscht werden. Aus dem Stand der Technik sind zu diesem Zweck die Ver- und Entschlüsselungseinheiten 10 im Teilnehmergerät 1 und im Medienserver 5 bekannt. Durch die Ver- und Entschlüsselungseinheiten 10 können Nutzdaten, z.B. die Mediendaten MD auf dem Medienserver 5 verschlüsselt werden, und dann als verschlüsselte Mediendaten CMD an das Teilnehmergerät 1 über das Mediennetzwerk 6 übertragen werden. Durch die Ver- und Entschlüsselungseinheit 10 des Teilnehmergerätes 1 können die empfangenen verschlüsselten Mediendaten CMD zur Nutzung wieder entschlüsselt werden. Da typischerweise ein symmetrisches Schlüsselverfahren eingesetzt wird, müssen die beiden Ver- und Entschlüsselungseinheiten 10 über den gleichen Schlüssel verfügen. Erfindungsgemäß wird den Ver- und Entschlüsselungseinheiten 10 von den Medienschlüsselgeneratoren 9 zu diesem Zweck der Medienschlüssel MK bereitgestellt.

Im Falle eines Funknetzwerks als Zugangsnetzwerk bräuchten Nutzdaten zur Übertragung nicht verschlüsselt werden, da eine Verschlüsselung bereits auf der Sicherungsebene des Netzwerkprotokolls eingesetzt wird. Dennoch kann das erfindungsgemäße Verfahren auch in einem Zugangsnetzwerk, das sich eines verschlüsselt übertragenden Netzwerkprotokolls bedient, angewendet werden.

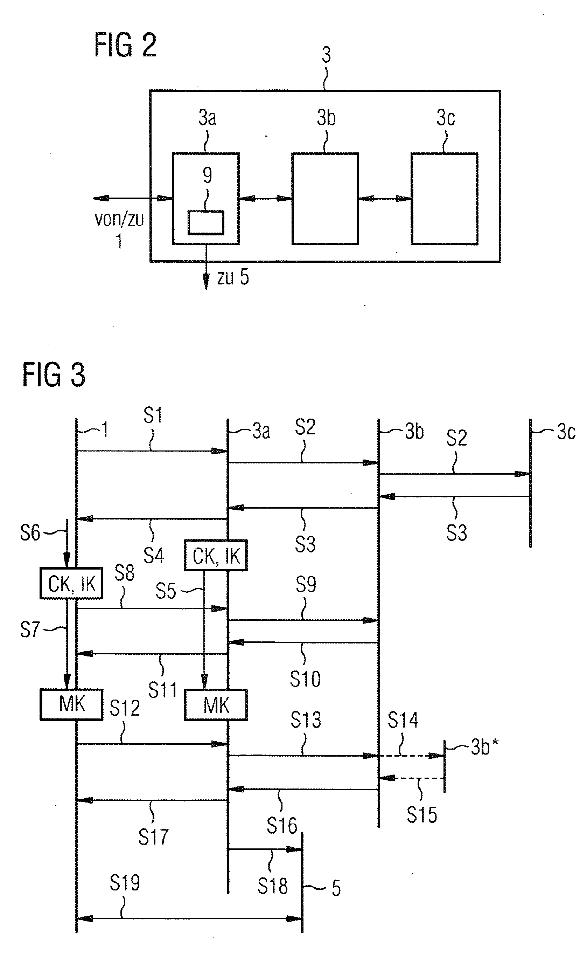

Die Aufgabe des Kontrollservers 3 liegt in der Einleitung, Steuerung und Kontrolle des Verbindungsaufbaus zwischen dem Teilnehmergerät 1 und der Vermittlungsstelle 7. In Figur 2 ist der Aufbau eines Kontrollservers 3 in einem Ausführungsbeispiel detaillierter dargestellt. Der Kontrollserver 3 umfasst mehrere funktionelle Komponenten, die zur Bearbeitung verschiedener Aufgaben des Kontrollservers 3 eingerichtet sind, nämlich ein Kontaktserver 3a, ein Sitzungsserver 3b und ein Teilnehmerserver 3c. Der Medienschlüsselgenerator 9 ist innerhalb des Kontaktservers 3a vorgesehen. Von dem Kontaktserver 3a gehen auch die Verbindungen zum Teilnehmergerät 1 und zum Medienserver 7 aus.

Üblicherweise sind alle drei Komponenten des Kontrollservers 3 softwareimplementiert, wobei die Komponenten sowohl auf einer gemeinsamen Hardwareeinheit, als auch auf getrennten Hardwareeinheiten ausgeführt werden können. Getrennte Hardwareeinheiten können dabei auch räumlich separiert sein, wobei ein Netzwerk ähnlich dem Kernnetzwerk 4 zum Datenaustausch eingesetzt werden kann.

Der in Figur 2 gezeigte Aufbau eines Kontaktservers 3 ist typisch für ein IP-Multimedia Subsystem nach 3GPP Standards. In einem solchen System wird der Kontaktserver 3a als Proxy Call Session Control Function (P-CSCF), der Sitzungsserver 3b als Serving Call Session Control Function (S-CSCF)und der Teilnehmerserver 3c als Home Subscriber Server (HSS) bezeichnet.

Die Funktion der einzelnen Komponenten, Kontaktserver 3a, Sitzungsserver 3b und Teilnehmerserver 3c, und somit auch die Funktion des Kontrollservers 3 und der Medienschlüsselgeneratoren 9 wird im Folgenden im Zusammenhang mit Figur 3 näher erläutert.

Figur 3 zeigt ein Sequenzdiagramm eines Verbindungsaufbaus und einer nachfolgende Übertragung von verschlüsselten Mediendaten CMD zwischen dem Medienserver 5 und dem Teilnehmergerät 1. Am Verbindungsaufbau sind der Kontaktserver 3a, der Sitzungsserver 3b und der Teilnehmerserver 3c beteiligt.

In einem ersten Schritt S1 stellt das Teilnehmergerät 1 eine Anfrage zum Verbindungsaufbau, auch "Sub-Registration" Anfrage genannt, an den Kontaktserver 3a des Kontrollservers 3. In einem IMS gemäß dem 3GPP Standard, bei dem der Kontaktserver als Proxy Call Session Control Function (P-CSCF) bezeichnet wird, kann beispielsweise als Sitzungsinitiierungsprotokoll das so genannte Session Initiation Protocol (SIP, entsprechend RFC 3261 und RFC 2543) in Verbindung mit dem Session Description Protocol (SDP, entsprechend RFC 2327) eingesetzt werden. In der Anfrage in Schritt S1 werden insbesondere die das Teilnehmergeräte 1 eindeutig kennzeichnenden Identifizierungsdaten ID übertragen. Diese Identifizierungdaten ID sind bei Mobiltelefonen beispielsweise auf der so genannten SIM (Subscriber Identity Module) - Karte hinterlegt. Die Identifizierungdaten ID werden dabei im folgenden zur Bestimmung des Satzes von Verschlüsselungsparametern K benötigt, die zur Verschlüsselung des weiteren Austausches von Kontrolldaten zwischen dem Teilnehmergerät 1 und dem Kontrollserver 3 eingesetzt werden. Zur Übertragung von Informationen während der Bestimmung des Satzes von Verschlüsselungsparametern K kann z.B. das Multimedia Internet KEYing (MIKEY, entsprechend RFC 3830) Protokoll innerhalb des SIP-Protokolls eingesetzt werden. Ebenfalls könnte die Übertragung gemäß den Security Descriptions (SDES, entsprechend einem Entwurf der IETF - Internet Engineering Task Force) erfolgen.

In einem zweiten Schritt S2 werden die Identifizierungsdaten ID vom Kontaktserver 3a über den Sitzungsserver 3b an den Teilnehmerserver 3c weitergeleitet. Der Sitzungsserver 3b (in einem 3GPP System die S-CSCF, ggf. mit Unterstützung einer so genannten Interrogating Call Session Control Function I-CSCF) dient der Sicherung von Sitzungsdaten, z.B. zur Rechnungslegung, und ist in dem hier dargestellten Zusammenhang nur von am Rande von Bedeutung. Der Teilnehmerserver 3c verfügt über eine Datenbank (bzw. hat Zugriff auf diese), in der die Identifizierungsdaten ID von Teilnehmergeräten hinterlegt sind. Der Teilnehmerserver 3c (Home Subscriber Server in einem 3GPP System) ermittelt die Zufallszahl R und bestimmt anhand der Zufallszahl R in Abhängigkeit der Identifizierungsdaten ID den Kontrolldatenschlüssel CK und den Integritätsschlüssel IK. Aus Sicherheitsgründen wird zur Bestimmung der Schlüssel nicht die Identifizierungsdaten ID direkt, sondern eine in der Datenbank den Identifizierungsdaten ID zugeordnete Zahlen- oder Zeichensequenz genutzt. Einsetzbare Verfahren und Algorithmen zur Schlüsselerzeugung sind dabei aus entsprechenden Spezifikationen des 3GPP-Systems bekannt. Zufallszahl R, der Kontrolldatenschlüssel CK und der Integritätsschlüssel IK bilden den Satz von Verschlüsselungsparametern K.

Dieser Satz von Verschlüsselungsparametern K wird in einem Schritt S3 vom Teilnehmerserver 3c wiederum über den Sitzungsserver 3b an den Kontaktserver 3a gesendet. Der Kontrolldatenschlüssel CK und der Integritätsschlüssel IK stehen damit ab jetzt dem Kontaktserver 3a für die Verschlüsselung von Kontrolldaten, die mit dem Teilnehmergerät 1 ausgetauscht werden, zur Verfügung. Der Kontrolldatenschlüssel CK wird zur eigentlichen Verschlüsselung mit einem symmetrischen Verschlüsselungsalgorithmus eingesetzt. Zusätzlich mit den Kontrolldaten versendete, mit dem Integritätsschlüssel IK verschlüsselte Sequenzen erlauben dabei, die Unversehrtheit der Kontrolldaten zu überprüfen und eventuelle Manipulationsversuche zu erkennen. Nach 3GPP haben beide Schlüssel eine Länge von 128 Bit.

In einem Schritt S4 wird die Zufallszahl R des Satzes der Verschlüsselungsparameter K (unverschlüsselt) an das Teilnehmergerät 1 gesendet. Die Schlüssel CK und IK werden aus Sicherheitsgründen nicht übertragen, sondern wie weiter unten beschrieben vom Teilnehmergerät 1 selber erzeugt.

Weiterhin bestimmt der Kontaktserver 3a in einem Schritt S5 den Medienschlüssel MK aus dem Kontrolldatenschlüssel CK und dem Integritätsschlüssel IK. Beispielsweise kann der Medienschlüssel MK über eine exklusive Oder-Verknüpfung (XOR) der beiden Schlüssel CK und IK berechnet werden. Dieses bietet sich im 3GPP insbesondere deshalb an, da die beiden Schlüssel CK und IK dieselbe Länge aufweisen. Alternativ ist z.B. möglich, den Medienschlüssel MK über eine unumkehrbar eindeutige Abbildung aus den beiden Schlüsseln CK und IK zu bestimmen. Eine solche Abbildung wird auch als Einweg-Hash-Funktion bezeichnet. Einsetzbare Einweg-Hash-Funktionen sind beispielsweise als Messenger Digest (MD4, MD5) oder Secure Hash-Algorithm (SHA) bekannt. Einweg-Hash-Funktionen haben den Vorteil, dass aus einem bekannt gewordenen Medienschlüssel MK keine Rückschlüsse auf die zugrunde liegenden Schlüssel CK und IK möglich sind. Prinzipiell ist aber auch jede andere Funktion, aus der sich eine Schlüsselsequenz aus einem oder beiden der Schlüssel CK und IK berechnen lässt, zur Berechnung des Medienschlüssels MK geeignet. Dabei braucht der resultierende Medienschlüssel MK in seiner Länge nicht mit den eingesetzten Schlüsseln CK und IK übereinstimmen. Weiterhin können über die Schlüssel CK und IK hinaus zusätzliche Parameter in die Bestimmung des Medienschlüssels MK einfließen. Vorraussetzung dabei ist lediglich, dass sowohl das Teilnehmergerät 1 als auch der Kontaktserver 3a über diese Parameter verfügen. Die Zufallszahl R oder die Identifizierungsdaten ID sind Beispiele für solche Parameter.

Nachdem das Teilnehmergerät 1 die in Schritt S4 übermittelte Zufallszahl empfangen hat, ermittelt das Teilnehmergerät in einem Schritt S6 aus der Zufallszahl R in Abhängigkeit der Identifizierungsdaten ID den Kontrolldatenschlüssel CK und den Integritätsschlüssel IK. Dieses wird auf gleiche Weise wie im Teilnehmerserver 3c durchgeführt, so dass identische Schlüssel IK und CK im Kontrollserver 3 und im Teilnehmergerät 1 vorliegen. Die aus Sicherheitsgründen zur Bestimmung der Schlüssel statt der Identifizierungsdaten ID selber eingesetzte Zahlen- oder Zeichensequenz ist im Teilnehmergerät üblicherweise in der SIM-Karte gespeichert.

Analog zu Schritt S5 wird nun im Teilnehmergerät 1 in einem Schritt S7 aus den Schlüsseln CK und IK der Medienschlüssel MK erzeugt.

Anhand der Zufallszahl R wird vom Teilnehmergerät 1 weiterhin eine Authentifizierungsantwort ermittelt, mit der in einem Schritt S8 eine zweite Anfrage als nächste Stufe des Verbindungsaufbaus z.B. über das Session Initiation Protocol (SIP) an den Kontaktserver 3a gesendet wird.

Diese zweite Anfrage wird in einem Schritt S9 an den Sitzungsserver 3b weitergeleitet, der die Authentifizierungsantwort der Teilnehmergeräts 1 überprüft und bei einem positiven Ergebnis die Sitzung als erfolgreich eröffnet registriert und in einem Schritt S10 ein Bestätigungssequenz zurück an den Kontaktserver 3a schickt. In Anlehnung an das Hypertext Transport Protocol (HTTP) wird auch im SIP eine Statusmeldung "200 OK" als positive Bestätigung eingesetzt. In einem Schritt S11 wird die Bestätigungssequenz an das Teilnehmergerät 1 weitergeleitet.

An diesem Punkt ist der Verbindungs- und Sitzungsaufbau abgeschlossen und die Übertragung von Nutzdaten kann initiiert werden. Für das Verfahren wird angenommen, dass an diesem Punkt auch die Bestimmung des Medienschlüssels MK in den Schritten S5 und S7 sowohl im Kontaktserver 3a als auch im Teilnehmergerät 1 abgeschlossen ist.

In einem Schritt S12 stellt das Teilnehmergerät 1 eine Anfrage zur Übermittlung der gewünschten Mediendaten an den Kontaktserver 3a. Im Session Initiation Protocol (SIP) ist für eine solche Anfrage die "Invite"-Sequenz vorgesehen, mit der Mediendaten MD von dem Medienserver 5 abgerufen werden können, wobei die Daten sowohl bereits auf dem Medienserver 5 vorhanden sein können, oder Gesprächsdaten sein können, die über den Medienserver 5 mit einem weiteren Teilnehmergerät ausgetauscht werden sollen. Im SIP Protokoll ist vorgesehen, dass mit der Anfrage ein Verschlüsselungskontext, der beispielsweise den zu benutzenden Verschlüsselungsalgorithmus angibt, gesendet werden kann. Der Verschlüsselungskontext umfasst nicht den Medienschlüssel MK, auch wenn dieses nach dem SIP Protokoll möglich wäre, da der Medienschlüssel MK im erfindungsgemäßen Verfahren bereits im Kontrollserver 3 vorliegt.

In einem Schritt S13 wird die "Invite"-Anfrage, jedoch ohne Verschlüsselungskontext, vom Kontaktserver 3a an den Sitzungsserver 3b weitergeleitet. Der Sitzungsserver 3b protokolliert die Anfrage und ermittelt, ob die Anfrage statthaft ist, also beispielsweise, ob das Teilnehmergerät 1 zum Zugriff auf die angefragten Mediendaten MD berechtigt ist oder nicht. Falls die Anfrage statthaft ist, sendet der Sitzungsserver 3b in einem Schritt S16 die Statusmeldung "200 OK" als positive Bestätigung zurück an den Kontaktserver 3a. Falls nicht bereits vorhandene Mediendaten MD angefragt werden, sondern ein Gespräch mit einem weiteren Teilnehmergerät, kontaktiert der Sitzungsserver 3b nach dem Schritt S13 zunächst in einem Schritt S14 einen entsprechenden Sitzungsserver 3b*, der für das weitere Teilnehmergerät zuständig ist. In einem Schritt S15 erhält der Sitzungsserver 3b vom Gegenpart eine Statusmeldung als Antwort, die danach im Schritt S16 weitergeleitet wird.

Nachdem der Kontaktserver 3a vom Sitzungsserver 3b Rückmeldung erhalten hat, sendet er die empfangene Statusmeldung in einem Schritt S18 an das Teilnehmergerät 1.

Wenn die Anfrage statthaft und die Rückmeldung positiv war, übermittelt der Kontaktserver 3a in einem Schritt S18 sowohl den Verschlüsselungskontext als auch den Medienschlüssel MK an den Medienserver 5. Daneben werden weitere Informationen übertragen, die die zu übermittelnden Mediendaten MD kennzeichnen. Da diese Übergabe über das Kernnetzwerk 4, das im Allgemeinen nicht öffentlich ist, erfolgt, sind hier prinzipiell keine weiteren Sicherungsmaßnahmen zum Schutz des Medienschlüssels MK erforderlich. Falls als zusätzliche Sicherungsmaßnahme gewünscht oder falls das Kernnetzwerk 4 doch ganz oder teilweise öffentlich sein sollte, kann selbstverständlich die Übergabe auch verschlüsselt erfolgen.

Der Medienserver 5 verschlüsselt daraufhin die Mediendaten MD mit dem Medienschlüssel MK im angefragten Verschlüsselungskontext, d.h. zum Beispiel unter Benutzung des angegebenen Verschlüsselungsalgorithmus. Die erhaltenen verschlüsselten Mediendaten CMD werden in einem abschließenden Schritt S19 an das Teilnehmergerät 1 gesendet.

Da das Mediennetzwerk 6 üblicherweise paketvermittelnd ist, ist es sinnvoll, die Mediendaten MD nicht zunächst als Ganzes zu verschlüsseln und dann zu paketweise zu übertragen, sondern jeweils die einzelnen Pakete zu verschlüsseln. Im Teilnehmergerät 1 können empfangene verschlüsselte Mediendaten CMD entschlüsselt werden, da dem Teilnehmergerät 1 der (von ihm selbst vorgegebene) Verschlüsselungskontext und auch der benötigte Medienschlüssel MK (in Schritt S7 berechnet) vorliegt.

Während der Übertragung der verschlüsselten Mediendaten CMD können zeitlich parallel bereits weitere Kontrolldaten zwischen dem Teilnehmergerät 1 und dem Kontrollserver 3 ausgetauscht werden. Diese Kontrolldaten können z.B. der Überprüfung der korrekten Abwicklung der Übertragung dienen oder aber weitere Anfragen betreffen. Dabei kann es zur Aushandlung neuer Schlüssel CK und IK kommen. Es ist vorteilhaft, in einem solchen Fall auch den Medienschlüssel MK neu zu berechnen, da ein Verschlüsselungsmechanismus umso sicherer ist, je kürzer derselbe Schlüssel verwendet wird. Es kann bei einem neu berechneten Medienschlüssel MK allerdings zu Synchronisationsproblemen kommen, wenn dem Medienserver 5 und dem Teilnehmergerät 1 der neue Schlüssel nicht gleichzeitig zur Verfügung steht. In einem solchen Fall greifen jedoch bereits bekannte und im 3GPP-System vorgesehen Fehlerkorrektur- und -behandlungsmechanismen. Ein vom Medienserver 5 mit einem dem Teilnehmergerät 1 nicht vorliegenden Medienschlüssel MK verschlüsseltes Paket würde vom Teilnehmergerät 1 als korrupt eingestuft und entweder verworfen (bei Gesprächsdaten) oder vom Teilnehmergerät 1 erneut vom Kontrollserver 3a angefordert.

## Patentansprüche

1. Verfahren zum Ver- und Entschlüsseln von Mediendaten (MD,
CMD), aufweisend die Schritte:
- Übertragen einer Anfrage von einem Teilnehmergerät (1) über ein Kontrollnetzwerk (2) an einen Kontrollserver (3) zum Festlegen eines Satzes von Verschlüsselungsparametern (K) für Kontrolldaten, wobei die Anfrage Identifizierungsdaten (ID) des Teilnehmergerätes (1) umfasst,
- Festlegen des Satzes von Verschlüsselungsparametern (K) für Kontrolldaten durch den Kontrollserver (3), umfassend eine Zufallszahl (R), einen Kontrolldatenschlüssel (CK) und einen Integritätsschlüssel (IK), wobei der Kontrolldatenschlüssel (CK) und der Integritätsschlüssel (IK) abhängig von der Zufallszahl (R) und den Identifizierungsdaten (ID) sind,
- Erzeugen eines Medienschlüssels (MK) in Abhängigkeit des Kontrolldatenschlüssel (CK) und des Integritätsschlüssel (IK) durch den Kontrollserver (3),
- Übertragen des Medienschlüssels (MK) von dem Kontrollserver (3) an einen Medienserver (5) über ein Kernnetzwerk (4),
- Verschlüsseln von unverschlüsselten Mediendaten (MD) durch den Medienserver (5) unter Verwendung des Medienschlüssels (MK) zur Versendung über ein Datennetzwerk (6) an das Teilnehmergerät (1) und/oder
- Entschlüsseln von über das Datennetzwerk (6) empfangenen,
von einem Teilnehmergerät (1) gesendeten verschlüsselten Mediendaten (CMD) durch den Medienserver (5) unter Verwendung des Medienschlüssels (MK).

2. Verfahren nach Anspruch 1, bei dem zusätzlich zum Medienschlüssels (MK) weitere Verschlüsselungsparameter, insbesondere den einzusetzende Verschlüsselungsalgorithmus betreffend, von dem Kontrollserver (3) über das Kernnetzwerk (4) an den Medienserver (5) übertragen werden.

3. Verfahren nach Anspruch 2, bei dem die weiteren Verschlüsselungsparameter zuvor vom Teilnehmergerät (1) festgelegt werden und an den Kontrollserver (3) übertragen werden.

4. Verfahren nach Anspruch 2, bei dem die weiteren Verschlüsselungsparameter zwischen Teilnehmergerät (1) und Kontrollserver (3) ausgehandelt werden.

5. Verfahren zum Ver- und Entschlüsseln von Mediendaten (MD, CMD), aufweisend die Schritte:
- Übertragen einer Anfrage von einem Teilnehmergerät (1) über ein Kontrollnetzwerk (2) an einen Kontrollserver (3) zum Festlegen eines Satzes von Verschlüsselungsparametern (K) für Kontrolldaten, wobei die Anfrage Identifizierungsdaten (ID) des Teilnehmergerätes (1) umfasst,
- Festlegen des Satzes von Verschlüsselungsparametern (K) für Kontrolldaten durch den Kontrollserver (3), umfassend eine Zufallszahl (R),
- Übertragen der Zufallszahl von dem Kontrollserver (3) zu dem Teilnehmergerät (1),
- Bestimmen eines Kontrolldatenschlüssel (CK) und einen Integritätsschlüssel (IK) abhängig von der Zufallszahl (R) und den Identifizierungsdaten (ID) durch das Teilnehmergerät (1),
- Erzeugen eines Medienschlüssels (MK) in Abhängigkeit des Kontrolldatenschlüssels (CK) und des Integritätsschlüssels (IK) durch das Teilnehmergerät (1),
- Entschlüsseln von über ein Datennetzwerk (6) empfangenen, von einem Medienserver (5) gesendeten verschlüsselten Mediendaten (CMD) durch das Teilnehmergerät (1) unter Verwendung des Medienschlüssels (MK) und/oder
- Verschlüsseln von unverschlüsselten Mediendaten (MD) durch das Teilnehmergerät (1) unter Verwendung des Medienschlüssels (MK) zur Versendung über das Datennetzwerk (6) an den Medienserver (5).

6. Verfahren nach einem der Ansprüche 1 bis 5, bei dem der Medienschlüssel (MK) durch eine exklusive Oder-Verknüpfung aus dem Kontrolldatenschlüssel (CK) und dem Integritätsschlüssel (IK) gebildet wird.

7. Verfahren nach einem der Ansprüche 1 bis 5, bei dem der Medienschlüssel (MK) durch eine Einweg-Hash-Funktion aus dem Kontrolldatenschlüssel (CK) und dem Integritätsschlüssel (IK) gebildet wird.

8. Verfahren nach einem der Ansprüche 1 bis 7, bei dem der Medienschlüssel (MK) direkt zur Ver- und Entschlüsselung verwendet wird.

9. Verfahren nach einem der Ansprüche 1 bis 7, bei dem abhängig vom Medienschlüssel (MK) ein weiterer Schlüssel bestimmt wird, der zur Ver- und Entschlüsselung verwendet wird.

10. Kontrollserver (3) eines Kommunikationssystems, aufweisend
- eine erste Schnittstelle zu einem Kontrollnetzwerk (2),
- eine zweite Schnittstelle zu einem Kernnetzwerk (4),
wobei
- der Kontrollserver (3) über die erste Schnittstelle und das Kontrollnetzwerk (2) mit einem Teilnehmergerät (1) und über die zweite Schnittstelle und das Kernnetzwerk (4) mit einem Medienserver (5) verbindbar ist und
wobei der Kontrollserver (3) dazu eingerichtet ist,
- Identifizierungsdaten (ID) von dem Teilnehmergerät (1) zu empfangen,
- einen Satz von Verschlüsselungsparametern (K) für Kontrolldaten festzulegen, wobei die Verschlüsselungsparameter (K) eine Zufallszahl (R) und abhängig von der Zufallszahl (R) und den Identifizierungsdaten (ID) einen Kontrolldatenschlüssel (CK) und einen Integritätsschlüssel (IK) umfassen,
- einen Medienschlüssels (MK) in Abhängigkeit des Kontrolldatenschlüssel (CK) und des Integritätsschlüssel (IK) zu erzeugen unc
- den Medienschlüssel (MK) über das Kernnetzwerk (4) an den Medienserver (5) zu übertragen.

11. Teilnehmergerät (1) zur Verwendung in einem Kommunikationssystem, aufweisend
- eine erste Schnittstelle zu einem Kontrollnetzwerk (2),
- eine zweite Schnittstelle zu einem Mediennetzwerk (4), wobei
- das Teilnehmergerät (1) über die erste Schnittstelle und das Kontrollnetzwerk (2) zum Austausch von Kontrolldaten mit einem Kontrollserver (3) und über die zweite Schnittstelle und das Mediennetzwerk (4) zum Austausch von Mediendaten (MD, CMD) mit einem Medienserver (5) verbindbar ist und
wobei das Teilnehmergerät (1) dazu eingerichtet ist,
- Identifizierungsdaten (ID) an den Kontrollserver zu senden,
- als Antwort eine Zufallszahl (R) zu empfangen,
- einen Kontrolldatenschlüssel (CK) und einen Integritätsschlüssel (IK) abhängig von der Zufallszahl (R) und den Identifizierungsdaten (ID) zu erzeugen, wobei der Kontrolldatenschlüssel (CK) und der Integritätsschlüssel (IK) der Ver- und Entschlüsselung der Kontrolldaten dienen und
- einen Medienschlüssel (MK) in Abhängigkeit des Kontrolldatenschlüssels (CK) und des Integritätsschlüssels (IK) zu erzeugen, wobei der Medienschlüssel (MK) der Ver- und Entschlüsselung der Mediendaten (MD, CMD) dient.

12. Computerprogrammprodukt mit Programmcode zur Ausführung eines Computerprogramms auf einem oder mehreren Computern eines Kommunikationssystems, **dadurch gekennzeichnet, dass** bei der Ausführung des Programmcodes ein Verfahren nach einem der Ansprüche 1 bis 7 ausgeführt wird.

## Claims

1. Method for encoding and decoding media data (MD, CMD), having the steps:
- transmitting a request from a subscriber device (1) via a control network (2) to a control server (3) for specifying a set of encoding parameters (K) for control data, the request comprising identification data (ID) of the subscriber device (1),
- specifying the set of encoding parameters (K) for control data by the control server (3), comprising a random number (R), a control data key (CK) and an integrity key (IK), the control data key (CK) and the integrity key (IK) being dependent on the random number (R) and the identification data (ID),
- generating a media key (MK) in dependence on the control data key (CK) and the integrity key (IK) via the control server (3),
- transmitting the media key (MK) from the control server (3) to a media server (5) via a core network (4),
- encoding uncoded media data (MD) by the media server (5) using the media key (MK) for sending via a data network (6) to the subscriber device (1) and/or
- decoding coded media data (CMD) received via the data network (6) and sent by a subscriber device (1), by the media server (5) by using the media key (MK).

2. Method according to Claim 1, in which, in addition to the media key (MK), further encoding parameters, particularly relating to the encoding algorithm to be used, are transmitted from the control server (3) via the core network (4) to the media server (5).

3. Method according to Claim 2, in which the further encoding parameters are previously specified by the subscriber device (1) and transmitted to the control server (3).

4. Method according to Claim 2, in which the further encoding parameters are negotiated between subscriber device (1) and control server (3).

5. Method for encoding and decoding media data (MD, CMD), having the steps:
- transmitting a request from a subscriber device (1) via a control network (2) to a control server (3) for specifying a set of encoding parameters (K) for control data, the request comprising identification data (ID) of the subscriber device (1),
- specifying the set of encoding parameters (K) for control data by the control server (3), comprising a random number (R),
- transmitting the random number from the control server (3) to the subscriber device (1),
- determining a control data key (CK) and an integrity key (IK) in dependence on the random number (R) and the identification data (ID) via the subscriber device (1),
- generating a media key (MK) in dependence on the control data key (CK) and the integrity key (IK) via the subscriber device (1),
- decoding coded media data (CMD) received via a data network (6) and sent by a media server (5), by the subscriber device (1) by using the media key (MK) and/or
- encoding uncoded media data (MD) by the subscriber device (1) by using the media key (MK) for sending to the media server (5) via the data network (6).

6. Method according to one of Claims 1 to 5, in which the media key (MK) is formed by an exclusive-OR combination from the control data key (CK) and the integrity key (IK).

7. Method according to one of Claims 1 to 5, in which the media key (MK) is formed from the control data key (CK) and the integrity key (IK) by a one-way hash function.

8. Method according to one of Claims 1 to 7, in which the media key (MK) is used directly for encoding and decoding.

9. Method according to one of Claims 1 to 7, in which a further key which is used for encoding and decoding is determined in dependence on the media key (MK).

10. Control server (3) of a communication system, having
- a first interface to a control network (2),
- a second interface to a core network (4),
wherein
- the control server (3) can be connected to a subscriber device (1) via the first interface and the control network (2) and to a media server (5) via the second interface and the core network (4), and wherein the control server (3) is set up for
- receiving identification data (ID) from the subscriber device (1),
- specifying a set of encoding parameters (K) for control data, the encoding parameters (K) comprising a random number (R) and, in dependence on the random number (R) and the identification data (ID), a control data key (CK) and an integrity key (IK),
- generating a media key (MK) in dependence on the control data key (CK) and the integrity key (IK), and
- transmitting the media key (MK) to the media server (5) via the core network (4).

11. Subscriber device (1) for use in a communication system, having
- a first interface to a control network (2),
- a second interface to a media network (4),
wherein
- the subscriber device (1) can be connected to a control server (3) via the first interface and the control network (2) for exchanging control data and to a media server (5) via the second interface and the media network (4) for exchanging media data (MD, CMD), and
wherein the subscriber device (1) is set up for
- sending identification data (ID) to the control server,
- receiving a random number (R) as response,
- generating a control data key (CK) and an integrity key (IK) in dependence on the random number (R) and the identification data (ID), the control data key (CK) and the integrity key (IK) being used for encoding and decoding the control data, and
- generating a media key (MK) in dependence on the control data key (CK) and the integrity key (IK), the media key (MK) being used for encoding and decoding the media data (MD, CMD).

12. Computer program product with program code for executing a computer program on one or more computers of a communication system, **characterized in that** during the execution of the program code, a method according to one of Claims 1 to 7 is carried out.

## Revendications

1. Procédé pour coder et décoder des données de médias (MD, CMD), comprenant les étapes de :
- transmission d'une demande d'un appareil d'abonné (1) via un réseau de contrôle (2) vers un serveur de contrôle (3) destiné à fixer un jeu de paramètres de codage (K) de données de contrôle, la demande comprenant des données d'identification (ID) de l'appareil d'abonné (1),
- fixation du jeu de paramètres de codage (K) de données de contrôle par le serveur de contrôle (3), comprenant un nombre aléatoire (R), une clé de données de contrôle (CK) et une clé d'intégrité (IK), la clé de données de contrôle (CK) et la clé d'intégrité (IK) étant dépendantes du nombre aléatoire (R) et des données d'identification (ID),
- génération d'une clé de média (MK) en fonction de la clé de données de contrôle (CK) et de la clé d'intégrité (IK) par le serveur de contrôle (3),
- transmission de la clé de média (MK) du serveur de contrôle (3) vers un serveur de média (5) via un réseau central (4),
- codage de données de médias non codées (MD) par le serveur de média (5) à l'aide de la clé de média (MK) pour envoi via un réseau de données (6) vers l'appareil d'abonné (1), et/ou
- décodage de données de médias codées (CMD), reçues via le réseau de données (6) et envoyées d'un appareil d'abonné (1), par le serveur de média (5) à l'aide de la clé de média (MK).

2. Procédé selon la revendication 1, dans lequel, en plus de la clé de média (MK), d'autres paramètres de codage, en particulier concernant l'algorithme de codage à employer, sont transmis du serveur de contrôle (3) via le réseau central (4) vers le serveur de média (5).

3. Procédé selon la revendication 2, dans lequel les autres paramètres de codage sont fixés au préalable par l'appareil d'abonné (1) et transmis vers le serveur de contrôle (3).

4. Procédé selon la revendication 2, dans lequel les autres paramètres de codage sont négociés entre appareil d'abonné (1) et serveur de contrôle (3).

5. Procédé pour coder et décoder des données de médias (MD, CMD), comprenant les étapes de :
- transmission d'une demande d'un appareil d'abonné (1) via un réseau de contrôle (2) vers un serveur de contrôle (3) destiné à fixer un jeu de paramètres de codage (K) de données de contrôle, la demande comprenant des données d'identification (ID) de l'appareil d'abonné (1),
- fixation du jeu de paramètres de codage (K) de données de contrôle par le serveur de contrôle (3), comprenant un nombre aléatoire (R),
- transmission du nombre aléatoire du serveur de contrôle (3) vers l'appareil d'abonné (1),
- détermination d'une clé de données de contrôle (CK) et d'une clé d'intégrité (IK) en fonction du nombre aléatoire (R) et des données d'identification (ID) par l'appareil d'abonné (1),
- génération d'une clé de média (MK) en fonction de la clé de données de contrôle (CK) et de la clé d'intégrité (IK) par l'appareil d'abonné (1),
- décodage de données de médias codées (CMD), reçues via un réseau de données (6) et envoyées d'un serveur de média (5), par l'appareil d'abonné (1) à l'aide de la clé de média (MK), et/ou
- codage de données de médias non codées (MD) par l'appareil d'abonné (1) à l'aide de la clé de média (MK) pour envoi via le réseau de données (6) vers le serveur de média (5).

6. Procédé selon une des revendications 1 à 5, dans lequel la clé de média (MK) est formée par une opération OU exclusif à partir de la clé de données de contrôle (CK) et de la clé d'intégrité (IK).

7. Procédé selon une des revendications 1 à 5, dans lequel la clé de média (MK) est formée par une fonction de hachage à sens unique à partir de la clé de données de contrôle (CK) et de la clé d'intégrité (IK).

8. Procédé selon une des revendications 1 à 7, dans lequel la clé de média (MK) est utilisée directement pour le codage et le décodage.

9. Procédé selon une des revendications 1 à 7, dans lequel, en fonction de la clé de média (MK), une autre clé est déterminée, laquelle est utilisée pour le codage et le décodage.

10. Serveur de contrôle (3) d'un système de communication, comprenant
- une première interface vers un réseau de contrôle (2),
- une seconde interface vers un réseau central (4),
- ledit serveur de contrôle (3) étant susceptible d'être connecté via la première interface et le réseau de contrôle (2) à un appareil d'abonné (1), et via la seconde interface et le réseau central (4) à un serveur de média (5), et
ledit serveur de contrôle (3) étant configuré pour :
- recevoir des données d'identification (ID) de l'appareil d'abonné (1),
- fixer un jeu de paramètres de codage (K) de données de contrôle, les paramètres de codage (K) comprenant un nombre aléatoire (R) et, en fonction du nombre aléatoire (R) et des données d'identification (ID), une clé de données de contrôle (CK) et une clé d'intégrité (IK),
- générer une clé de média (MK) en fonction de la clé de données de contrôle (CK) et de la clé d'intégrité (IK) et
- transmettre la clé de média (MK) via le réseau central (4) vers le serveur de média (5).

11. Appareil d'abonné (1) destiné à être utilisé dans un système de communication, comprenant
- une première interface vers un réseau de contrôle (2),
- une seconde interface vers un réseau de média (4),
- ledit appareil d'abonné (1) étant susceptible d'être connecté via la première interface et le réseau de contrôlé (2) à un serveur de contrôle (3) pour échanger des données de contrôle, et via la seconde interface et le réseau de média (4) à un serveur de média (5) pour échanger des données de médias (MD, CMD), et
ledit appareil d'abonné (1) étant configuré pour :
- envoyer des données d'identification (ID) au serveur de contrôle,
- recevoir en réponse un nombre aléatoire (R),
- générer une clé de données de contrôle (CK) et une clé d'intégrité (IK) en fonction du nombre aléatoire (R) et des données d'identification (ID), la clé de données de contrôle (CK) et la clé d'intégrité (IK) servant à coder et à décoder les données de contrôle, et
- générer une clé de média (MK) en fonction de la clé de données de contrôle (CK) et de la clé d'intégrité (IK), la clé de média (MK) servant à coder et à décoder les données de médias (MD, CMD).

12. Programme informatique comprenant un code de programme destiné à exécuter un programme informatique sur un ou plusieurs ordinateurs d'un système de communication, **caractérisé en ce que**, lors de l'exécution du code de programme, un procédé selon une des revendications 1 à 7 est mis en oeuvre.
